Europäisches Patentamt

European Patent Office

Office européen des brevets

(11) Publication number: **0 167 315**
**B1**

(12) **EUROPEAN PATENT SPECIFICATION**

(45) Date of publication of patent specification: **28.09.88**

(21) Application number: **85304248.9**

(22) Date of filing: **14.06.85**

(51) Int. Cl.⁴: **B 60 R 1/06,** F 15 B 7/06

(54) Hydraulic remote control system.

(30) Priority: **30.06.84 GB 8416711**

(43) Date of publication of application:
**08.01.86 Bulletin 86/02**

(45) Publication of the grant of the patent:
**28.09.88 Bulletin 88/39**

(84) Designated Contracting States:
**DE FR GB**

(56) References cited:
**EP-A-0 152 218**
**DE-A-3 147 825**
**DE-B-1 128 303**
**DE-U-7 110 524**
**FR-A-2 424 834**

(73) Proprietor: **BRITAX WINGARD LIMITED**
**Kingsham Road**
**Chichester, West Sussex P019 2AQ (GB)**

(72) Inventor: **Cunningham, Douglas James**
**42 Viking Way**
**Horndean Portsmouth Hampshire (GB)**

(74) Representative: **Hollinghurst, Antony**
**Britax Limited Patent Department**
**Chichester West Sussex PO19 2AQ (GB)**

Courier Press, Leamington Spa, England.

## Description

This invention relates to a sealed unit for a hydraulic remote control system of the type comprising a tube of flexible material having its ends sealed, the tube being partially flattened and containing sufficient hydraulic liquid to ensure that, when a first end region of the tube is substantially flattened, the other end region of the tube is substantially distended by the liquid. A sealed unit of this type is disclosed in DE-U-7110524.

FR-A-2424834 discloses the use of three hydraulic circuits to control the orientation of a vehicle rearview mirror. The precision of operation of such a system is adversely affected by unintended changes in the effective volume of any of the hydraulic circuits and consequently, as is conventional, each hydraulic circuit has a chamber of relatively large volume at each end interconnected by a relatively small diameter tube. This minimises the effect on the overall volume of the circuit of changes in the effective volume of the tube, for example due to stretching of the walls thereof. The present invention is concerned with the provision of a sealed unit of the type described above which is suitable for use in a control system of this type.

According to the invention, in a sealed unit of the type described above, opposite side walls of the tube are joined along a weld line so that end regions occupying the full width of the tube are interconnected by a central region of reduced width.

As already mentioned, a hydraulic remote control system of the type disclosed above requires three such sealed units. In accordance with a preferred form of this invention, three such units may be formed integrally from a relatively large diameter flexible tube separated by weld lines so as to provide three tubes with their interiors isolated from one another.

Embodiments of the invention will now be described, by way of example, with reference to the accompany drawings, in which:

Figure 1 is a side view of a single sealed hydraulic unit in accordance with the invention;

Figure 2 is a cross-sectional view taken on the line 2-2 in Figure 1;

Figure 3 is a side view of a triple sealed hydraulic unit in accordance with the invention;

Figure 4 is a cross-sectional view taken on the line 4-4 in Figure 3;

Figure 5 is a transverse cross-sectional view of a control device for use with the sealed unit shown in Figures 3 and 4;

Figure 6 is a cross-sectional view taken on the line 6-6 in Figure 5; and

Figure 7 is a cross-sectional view of an exterior rearview mirror for a motor vehicle adapted to be controlled by the actuating member illustrated in Figures 5 and 6.

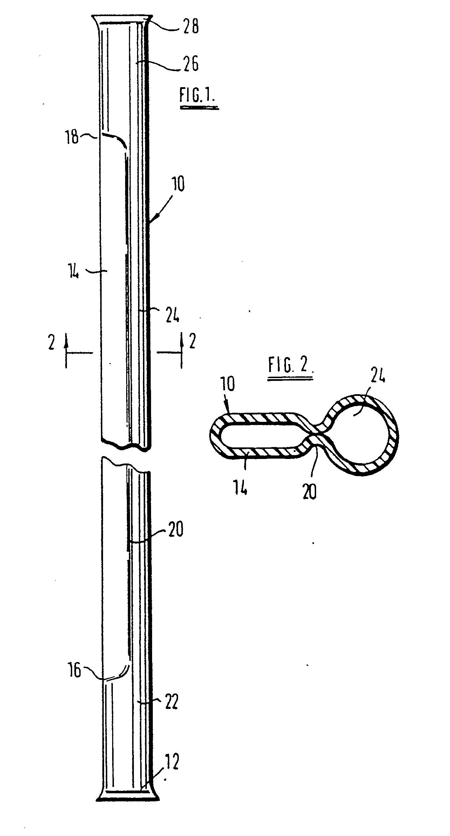

Referring to Figures 1 and 2, a tube l0 of polyethylene is sealed at one end along a weld line 12 and then partly filled with hydraulic liquid.

Next, a zone 14, extending from a point 16 spaced from the sealed end 12 of the tube, to a point 18 at an approximately equal distance from the other end of the tube, is flattened and the abutting walls of the tube 10 welded together along a line 20 extending from an edge of the tube adjacent to the point 16, then parallel to the opposite edge of the tube 10 and finally to the point 18. The tube 10 now has a full-diameter end region 22 adjacent to its sealed end 12 which is connected by a narrow diameter central portion 24 to a full-diameter end region 26 at its other end. The end region 22 is then flattened and the level of liquid in the tube topped up, if necessary, so that it is completely full. The open end is then saealed along a weld line 28. The result is a sealed hydraulic unit containing sufficient liquid to ensure that when one of two end regions 22 and 26 is at least partially flattened, the other is fully distended. As will be apparent from Figure 2, the zone 14 is also completely enclosed but contains only air and plays no part on the operation of the device, as will be explained hereinafter. The material forming the zone 14 may be severed from the rest of the unit if desired, for example, if it is desired to make the cross-section of the central part of the hydraulic unit as small or as flexible as possible.

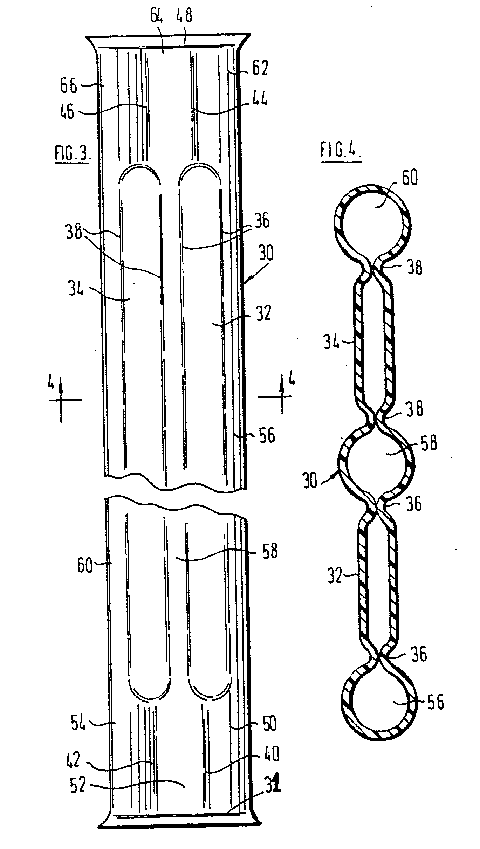

Figure 3 illustrates another embodiment of the invention in which three sealed hydraulic units are formed as a single integral component. A tube 30 is sealed along a weld line 31 at one end and partially filled with hydraulic liquid. Opposite walls are then pressed together to form two elongate flattened zones 32 and 34, the ends of which are spaced from the ends of the tube 10. The boundaries of the zones 32 and 34 are welded along weld lines 36 and 38 additional weld lines 40 and 42 run from the ends of the zones 36 and 38 to the weld line 31 while corresponding weld lines 44 and 46 run from the other ends of the zones 32 and 34 to the other end of the tube 10. The bottom end of the tube 30, on each side of the weld lines 40 and 42, is at least partially flattened and the level of liquid at the other end topped up prior to sealing along a weld line 48 which connects with the ends of the weld lines 44 and 46. The result is a component comprising three separate sealed hydraulic units having respective first end regions 50, 52 and 54 which are connected by respective reduced diameter central tubes 56, 58 and 60 to enlarged end regions 62, 64 and 66 at the other end of the tube 30. As before, the volume of liquid in each unit is such that when its end region at one end is at least partially flattened, its end region at the other end is fully distended and vice versa.

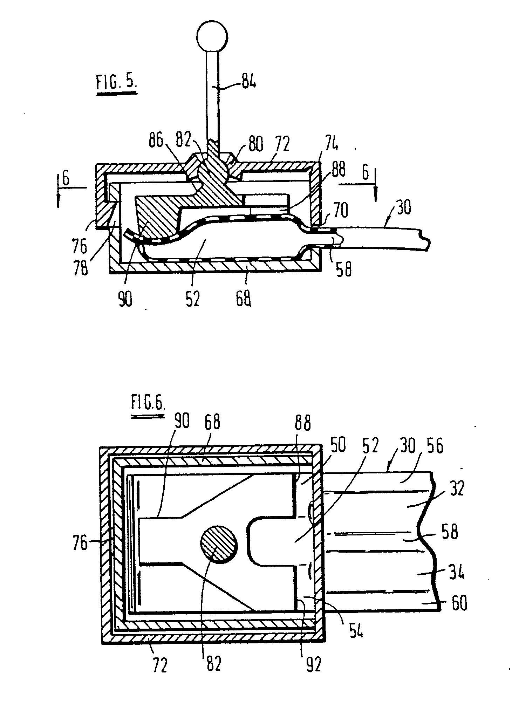

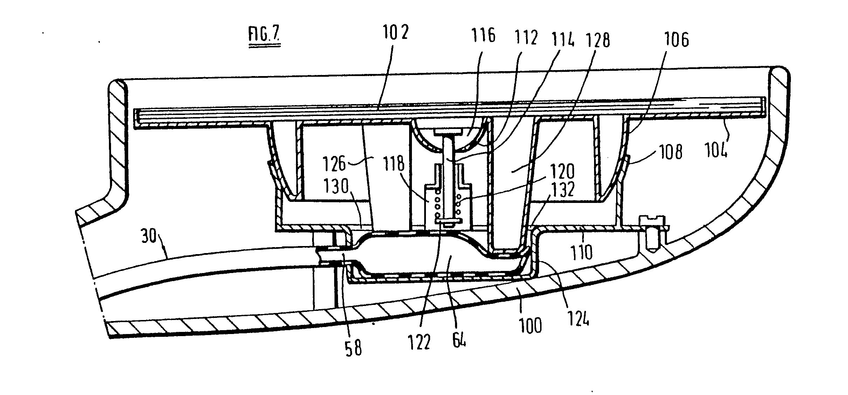

Referring now to Figures 5 and 6, the three end regions 50, 52 and 54 of the tube 30 are placed in a rectangular case 68 which has an opening 70 in one side wall through which the tube sections 56, 58 and 60 project. A lid 72 is connected to the case 68 by an integral hinge formation 74 and has a snap-catch formation 76 on its opposite edge which engages in a slot 78 in the corresponding wall of the case 68. In the centre of the lid 72 is a socket 80 for a spherical formation 82 which has an operating lever 84 projecting outwardly form the case 68 and which carries a tripod member 86, each of the three feet 88, 90 and 92 of which engages with a respective one of the end regions 50, 52 and 54 of the tube 30.

Thus, when the lever 84 is in its central position, each of the three end regions 50, 52 and 54 of the tube 30 is equally compressed. If the lever 84 is displaced from its central position, one or two of the end regions 50, 52 and 54 is further compressed while the remaining end region or sections is allowed to distend, thus causing a corresponding displacement of hydraulic liquid along the tubes 56, 58 and 60.

Turning now to Figure 7, an exterior rearview mirror unit for a motor vehicle comprises a housing 100 containing a mirror 102 mounted on a mirror carrier 104. The mirror carrier 104 has a part-spherical flange 106 extending away from the mirror 102 and engaging in a correspondingly shaped flange 108 on a base member 110 which is secured to the back of the inside of the mirror case 100 Concentric with the part-spherical flange 106 is a hemispherical socket 112 having a central hole through which projects a rod 114 having a hemispherical head 116 which engages in the socket 112. The other end of the rod 114 projects through a hole in the inner end of a central recess 118 in the member 110 and carries a compression spring 120 which engages between a washer 122 and the bottom of the recess 118 so as to draw the hemispherical flange 106 into engagement with the hemispherical surface of the flange 108 on the member 110. Thus the mirror 102 is pivotable about tbe central of curvature of the hemispherical flange 106.

A casing 124, similar to the case 68 of Figures 5 and 6, is formed on the other side of the member 110 to the recess 118 and accommodates the end regions 62, 64 and 66 of the tube 30. Three legs, of which two (126 and 128) are visible in Figure 7, extend from the mirror carrier 104 through openings 130, 132 in the member 110 into engagement with respective end regions 62, 64 and 66 of the tube 30. Thus any change in the relative volume of liquid in the end region 62, 64 and 66 will cause a corresponding pivotal movement of the mirror carrier 104 about the hemispherical head 116. In other words, movement of the lever 84 (Figure 5) will cause a corresponding movement of the mirror 102.

Since the hydraulic units are made entirely of polythene, the choice of hydraulic liquid is not limited by the need to avoid corrosion. For example water, containing a suitable anti-freeze agent, is entirely suitable.

### Claims

1. A sealed unit for a hydraulic remote control system comprising a tube (10) of flexible material having its ends sealed, the tube (10) being partially flattened and (10) containing sufficient hydraulic liquid to ensure that, when a first end region (26, 28) of the tube (10) is substantially flattened, the other end region (28, 26) of the tube (10) is substantially distended by the liquid, characterised in that opposite side walls of the tube (10) are joined along a weld line (20) so that end regions (26, 28) occupying the full width of the tube are interconnected by a central region (24) of reduced width.

2. A sealed unit assembly comprising three sealed units according to claim 1, wherein the tubes of the three sealed units (50, 56, 62; 52, 58, 64; 54, 60, 66) are formed from a single larger tube (30), each sealed unit (50, 56, 62; 52, 58, 64; 54, 60, 66) being separated from an adjacent sealed unit by at least one weld line (36, 38, 40, 42, 44, 46) joining opposite side walls of the larger tube (30).

### Patentansprüche

1. Abgedichtete Einheit für ein hydraulisches Fernsteuersystem, umfassend ein Rohr (10) flexiblen Materials, dessen Enden abgedichtet sind, wobei das Rohr (10) teilweise abgeflacht ist und (10) genügend Hydraulikflüssigkeit enthält, um zu gewährleisten, daß, wenn eine erste Endzone (26, 28) des Rohrs (10) im wesentlichen abgeflacht ist, die andere Endzone (28, 26) des Rohrs (10) von der Flüssigkeit wesentlich ausgedehnt wird, dadurch gekennzeichnet, daß gegenüberliegende Seitenwände des Rohrs (10) entlang einer Schweißlinie (2O) verbunden sind, so daß Endzonen (26, 28), die die volle Breite des Rohrs belegen, durch eine Mittelzone (24) verringerter Breite verbunden sind.

2. Abgedichtete Verbundeinheit aus drei abgedichteten Einheiten gemäß Anspuch 1, bei der die Rohre der drei abgedichteten Einheiten (50, 56, 62; 52, 58, 64; 54, 60, 66) aus einem einzelnen größeren Rohr (30) gebildet sind, und jede abgedichtete Einheit (50, 56, 62; 52, 58, 64; 54, 60, 66) von einer benachbarten abgedichteten Einheit durch mindestens eine Schweißlinie (36, 38, 40, 42, 44, 46) getrennt ist, welche gegenüberliegende Seitenwände des größeren Rohrs (30) verbindet.

### Revendications

1. Unité étanche pour un système hydraulique de commande à distance comprenant un tube (10) réalisé en un matériau souple et dont les extrémités sont fermées de façon étanche, le tube (10) étant partiellement aplati et contenant une quantité suffisante de liquide hydraulique pour garantir que, lorsqu'une première région d'extrémité (26,28) du tube (10) est sensiblement aplatie, l'autre région d'extrémité (28,26) du tube (10) est sensiblement dilatée par le liquide, caractérisée en ce que des parois latérales opposées du tube (10) sont réunies le long d'une ligne de soudure (20) de sorte que des régions d'extrémité (26,28) occupant toute la largeur du tube sont interconnectée par une région centrale (24) de largeur réduite.

2. Ensemble d'unités étanches comprenant trois unités étanches selon la revendication 1, dans lequel les tubes des trois unités étanches (50,56,62;52,58,64;54,60,66) sont constituées par un seul tube (30) de taille plus importante, chaque unité étanche (50,56,62;52,58,64;54,60,66) étant séparée d'une unité étanche voisine par au moins une ligne de soudure (36,38,40,42,44,46) réunissant des parois latérales opposées du tube (30) de taille plus importante.

FIG.1.

FIG. 2.

FIG.3.

FIG.4.

FIG. 5.

FIG. 6.

FIG.7